# EUROPEAN PATENT APPLICATION

(11) **EP 4 734 344 A1**
(43) Date of publication of application: **29.04.2026**
(21) Application number: 25211167.9
(22) Date of filing: 24.10.2025
(51) Int. Cl.: H02M 1/00, H02M 1/15, H02M 3/158

(54) **A SWITCHED MODE POWER SUPPLY ARRANGED FOR EFFICIENTLY POWERING A RANGE OF LOADS AND METHOD OF OPERATING SUCH**

(30) Priority: 25.10.2024 US 202418926650
(71) Applicant: Nexperia B.V., 6534 AB Nijmegen (NL)
(72) Inventor: Vera, Alejandro, Dallas (US); Olivares, Jario, Dallas (US); Levine, Mitchell, Dallas (US)
(74) Representative: Pjanovic, Ilija

(57) **Abstract**

A Switched Mode Power Supply (SMPS) with a switching stage has a high-side switch, a low-side switch, and an output inductor. The SMPS also has control circuitry for controlling the high-side switch and the low-side switch based on a clock signal. The control circuitry is configured to detect that an output voltage of the switching stage deviates from a reference voltage and thereby enable negative valley regulation. Upon enabling negative valley regulation, the control circuitry detects that a current flowing through the inductor falls below a threshold and, based on the detection, initiates a next clock cycle of the clock signal.

## Description

### BACKGROUND OF THE DISCLOSURE

### 1. Field of the Disclosure

The present disclosure generally relates to the field of Switched Mode Power Supplies (SMPS) and, more specifically, to SMPS that are arranged to support a wide range of loads.

### 2. Description of Related Art

An SMPS is an electronic power supply system that converts electrical power efficiently by switching on and off at certain frequencies. Unlike linear power supplies, which regulate output by dissipating excess power as heat, SMPS uses a combination of inductors, capacitors, and semiconductors to store and release energy in a controlled manner. This approach makes SMPS more efficient, compact, and capable of handling a wide range of input voltages, which is why it's widely used in devices like computers, televisions, and industrial equipment.

SMPS can be categorized into several types based on their function: buck converters, which step down voltage, boost converters, which step up voltage, buck-boost converters, which can step up or down voltage, and flyback converters, used for isolation and voltage conversion. The core of an SMPS's operation involves controlling the switching of transistors or Field-Effect Transistors (FET) to regulate the output voltage or current.

Controlling the FETs in an SMPS is of importance for maintaining a stable output despite variations in the load. The control scheme typically revolves around feedback mechanisms that monitor the output and adjust the switching of the FETs accordingly.

Pulse Width Modulation (PWM) is the most widely used control technique in SMPS. In PWM, the FETs are switched on and off at a constant frequency, but the duration of the "on" time, i.e. the duty cycle, is varied to control the output voltage or current. The duty cycle is directly proportional to the output: increasing the duty cycle increases the output voltage in a buck converter while decreasing it reduces the output voltage.

A PWM controller continuously compares the output voltage to a predefined reference value. If the output voltage drops due to an increased load, the controller increases the duty cycle to compensate by providing more power. Conversely, if the load decreases and the output voltage rises, the duty cycle is reduced. This feedback loop ensures that the output remains stable even with varying loads.

SMPS can encounter challenges when operating under different load conditions, both very high and very low loads. At high load levels, the demand for current increases significantly, which can stress the components and lead to overheating or even failure if not properly managed. The control scheme must respond quickly to prevent overcurrent situations, and the thermal design must ensure that excess heat is dissipated effectively.

On the other hand, at very low load conditions, the power supply can become less efficient as the switching losses and other overheads become more significant relative to the output power. In some cases, the SMPS can enter a discontinuous conduction mode, DCM, where the inductor current drops to zero during each switching cycle, leading to increased ripple and potential instability. Maintaining stable output in low load situations can be challenging, as the control loop can need to adjust to prevent oscillations or excessive output voltage deviations.

### SUMMARY OF THE DISCLOSURE

The present disclosure has found that it would be advantageous to achieve an SMPS that is able to efficiently operate with different kinds of loads.

In a first aspect of the present disclosure, there is provided an SMPS comprising: a switching stage that comprises a high-side switch, a low-side switch, and an output inductor; and control circuitry for controlling operation of the high-side switch and the low-side switch based on a clock signal. The control circuitry is arranged to detect that an output voltage of the switching stage deviates from a reference voltage and to thereby enable negative valley regulation, and upon enabling negative valley regulation: detect that a current flowing through the inductor falls below a threshold. Based on the detection, a next clock cycle of the clock signal is initiated.

In a peak current mode switching mode power supply operating in Forced Continuous Conduction Mode, FCCM, the inductor current is continuously flowing without interruptions, and it can swing both positive and negative. When the load is heavy, the control loop of the switched mode power supply can focus on regulating the peak of the inductor current through the error amplifier and modulator stages.

Meanwhile, the minimum, i.e. the valley, of the inductor current can be influenced by external factors such as the input voltage (Vin), output voltage (Vout), and the switching frequency of the switched mode power supply. The underlying concept of the present disclosure is to actively regulate this valley.

When the load is removed and effectively becomes zero amperes (0A), the control loop can try, in prior art solutions, to reduce the peak inductor current to the minimum necessary to keep the average inductor current at zero. This results in the inductor current needing to swing positively and negatively around zero. With low or no load, the inductor current ripple can become very small.

Consequently, the peak current must also be very small, which can challenge the system's loop circuitry, including the error amplifier and modulator, as they can need to operate near this minimal current level. This situation can strain the circuitry, demanding high precision to maintain stable operation.

To avoid complicating the error amplifier and modulator to handle near-zero currents, a frequency foldback scheme is employed. This scheme is designed to manage light or no-load conditions more effectively while ensuring the error amplifier and modulator remain in a suitable operating range.

The frequency foldback technique can work by clamping the voltage of the error amplifier. This clamping maintains a constant peak inductor current by regulating the negative valley threshold of the inductor current.

Essentially, the clamping voltage sets a minimum level for the negative valley. The control system then uses this clamping mechanism to ensure that the switching frequency is adjusted accordingly. The main oscillator of the converter is controlled to generate switching pulses only when the inductor current reaches the set negative valley threshold. This approach ensures that during light or no-load conditions, the converter operates with a fixed peak current and stabilizes the voltage regulation by adjusting the frequency in response to the negative valley threshold.

In other words, the present disclosure is directed to an SMPS that incorporates an advanced control mechanism to manage its operation effectively. This SMPS includes a switching stage composed of a high-side switch, a low-side switch, and an output inductor. The high-side switch is connected between the input voltage and the output inductor, while the low-side switch is connected between the output inductor and ground. The output inductor plays an important role in storing energy and smoothing the output current.

The control circuitry of the SMPS is responsible for managing the operation of both the high-side and low-side switches. This control circuitry operates based on a clock signal that dictates the timing of the switching events. One feature of this control system is its ability to monitor the output voltage of the switching stage. When the system detects that the output voltage deviates from a set reference voltage, it activates a regulation process known as negative valley regulation. For example, whenever the output voltage falls below a certain threshold, the negative valley regulation can be initiated.

During negative valley regulation, the control circuitry performs a function by checking whether the current flowing through the output inductor falls below a specific threshold. This threshold is predetermined to identify when the current is low enough to implement a change in the switching operation. If the current is detected to be below this threshold, the control circuitry responds by initiating the next clock cycle of the clock signal. This adjustment in timing helps the system adapt to the low current condition, ensuring that the power supply continues to operate efficiently and maintains stable output voltage.

The result is that the frequency of the control signal becomes adaptive. The next cycle of the control signal can be allowed to start whenever the current falls below a certain threshold.

The SMPS described integrates a control system that not only regulates the switching of its components but also dynamically adjusts its operation based on real-time measurements of current and voltage. By employing negative valley regulation, the SMPS manages performance and stability, particularly under conditions of varying load. The ability to monitor current and control the timing of switching cycles ensures that the power supply remains reliable and efficient in different operational scenarios.

In accordance with the above, it is detected that an output voltage of the switching stage deviates from a reference voltage and thereby enable negative valley regulation. This can refer to the actual error. For example, if the feedback voltage minus the reference voltage is too high, then we can conclude that we are dealing with light loads. This can be the trigger for enabling the negative valley regulation.

In accordance with the above, it is then detected that a current flowing through the inductor falls below a threshold. This means that the current flowing through the inductor, or transformer, of the switched mode power supply falls below a threshold. If that's the case, the next clock cycle is allowed to initiate. This is meant with negative valley regulation.

In an example, the control circuitry is arranged to set the threshold.

The threshold may, for example, be set by determining a difference between an output voltage of the switching stage and a reference output voltage.

The threshold is thus not limited to a fixed predetermined threshold but can depend on the error, i.e. the difference between the feedback voltage and the reference voltage.

In yet another example, the control circuitry further comprises a low-side sense switch; and a current source. The current source is arranged to provide a current to the low-side sense switch. The current is proportional to the difference. A voltage over the low sense switch, caused by the current, is the threshold.

Advantageously, the high-side switch and the low-side switch are both FETs and the low-side sense switch is an FET.

More advantageously, the low-side switch and the low-side sense switch are a same type of FET.

The advantage hereof is that the voltage over the low-side sense switch and the voltage over the low-side switch of the SMPS itself can be accurately compared to one another.

In a further example, the SMPS is any of a buck converter, a boost converter, a buck-boost converter, a cuk converter, a flyback converter, and a forward converter.

In a second aspect of the present disclosure, there is provided a method of operating an SMPS in accordance with any of the previous examples The method comprises the steps of: operating, by the control circuitry, operation of the high-side switch and the low-side switch based on the clock signal; and detecting, by the control circuitry, that the output voltage of the switching stage deviates from a reference voltage and to thereby enable negative valley regulation. Upon enabling negative valley regulation, the method further comprises: detecting, by the control circuitry, that the current flowing through the inductor falls below a threshold; and initiating, by the control circuitry, the next clock cycle of the clock signal.

It is noted that the advantages as explained with reference to the first aspect of the present disclosure, being the SMPS, are also applicable to the second aspect of the present disclosure, being the method of operating such an SMPS.

In an example, the method further comprises the step of: setting, by the control circuitry, the threshold.

In a further example, the step of setting comprises: setting, by the control circuitry, the threshold by determining a difference between an output voltage of the switching stage and a reference output voltage.

In an example, the control circuitry further comprises a low-side sense switch and a current source, wherein the method comprises the step of: providing, by the current source, a current to the low-side sense switch, the current being proportional to the difference, wherein a voltage over the low sense switch, caused by the current, is the threshold.

In another example, the high-side switch and the low-side switch are both FETs and the low-side sense switch is an FET.

In yet another example, the low-side switch and the low-side sense switch are a same type of FET.

In an even further example, the SMPS is any of a buck converter, a boost converter, a buck-boost converter, a cuk converter, a flyback converter, and a forward converter.

In a third aspect of the present disclosure, there is provided a non-transitory computer readable medium having instructions stored thereon which, when executed by control circuitry of an SMPS, cause the control circuitry to implement a method in accordance with any of the examples provided above.

### BRIEF DESCRIPTION OF THE DRAWINGS

In the appended figures, similar components and/or features can have the same reference label. Further, various components of the same type can be distinguished by following the reference label by a dash and a second label that distinguishes among the similar components. If only the first reference label is used in the specification, the description is applicable to any one of the similar components having the same first reference label irrespective of the second reference label.

The above and other aspects of the disclosure will be apparent from and elucidated with reference to the examples described hereinafter.
Fig.1 is a schematic view of a power stage of the Switched Mode Power Supply, SMPS, in accordance with the present disclosure;
Fig. 2 shows the loop concept that relates to the control circuitry in accordance with the present disclosure.
Fig. 3 is a schematic overview of waveforms related to the control scheme in accordance with the present disclosure.

### DETAILED DESCRIPTION OF THE DISCLOSURE

It is again noted that in the description of the figures, the same reference numerals refer to the same or similar components performing a same or essentially similar function.

A more detailed description is made with reference to particular examples, some of which are illustrated in the appended drawings so that the features of the present disclosure can be understood in more detail. It is noted that the drawings only illustrate typical examples and are therefore not to be considered to limit the scope of the subject matter of the claims. The drawings are incorporated to facilitate an understanding of the disclosure and are thus not necessarily drawn to scale. The advantages of the subject matter as claimed will become apparent to those skilled in the art upon reading the description in conjunction with the accompanying drawings.

The preceding description above and ensuing description below provide preferred exemplary embodiments only and are not intended to limit the scope, applicability, or configuration of the disclosure. Rather, the ensuing description of the preferred exemplary embodiments will provide those skilled in the art with an enabling description for implementing a preferred exemplary embodiment of the disclosure, it is understood that various changes can be made in the function and arrangement of elements, including combinations of features from different embodiments, without departing from the scope of the disclosure.

Unless the context clearly requires otherwise, throughout the description and the claims, the words "comprise" "comprising" and the like are to be construed in an inclusive sense, as opposed to an exclusive or exhaustive sense; that is to say, in the sense of "including, but not limited to." As used herein, the terms "connected", "coupled" or any variant thereof means any connection or coupling, either direct or indirect, between two or more elements; the coupling or connection between the elements can be physical, logical, electromagnetic, or a combination thereof. Additionally, the words "herein," "above," "below," and words of similar import, when used in this application, refer to this application as a whole and not to any particular portions of this application. Where the context permits, words in the Detailed Description using the singular or plural number can also include the plural or singular number respectively. The word "or" in reference to a list of two or more items, covers all the following interpretations of the word: any of the items in the list, all of the items in the list, and any combination of the items in the list.

These and other changes can be made to the technology considering the following detailed description. While the description describes certain examples of the technology and describes the best mode contemplated, no matter how detailed the description appears, the technology can be practiced in many ways. Details of the system can vary considerably in its specific implementation while still being encompassed by the technology disclosed herein.

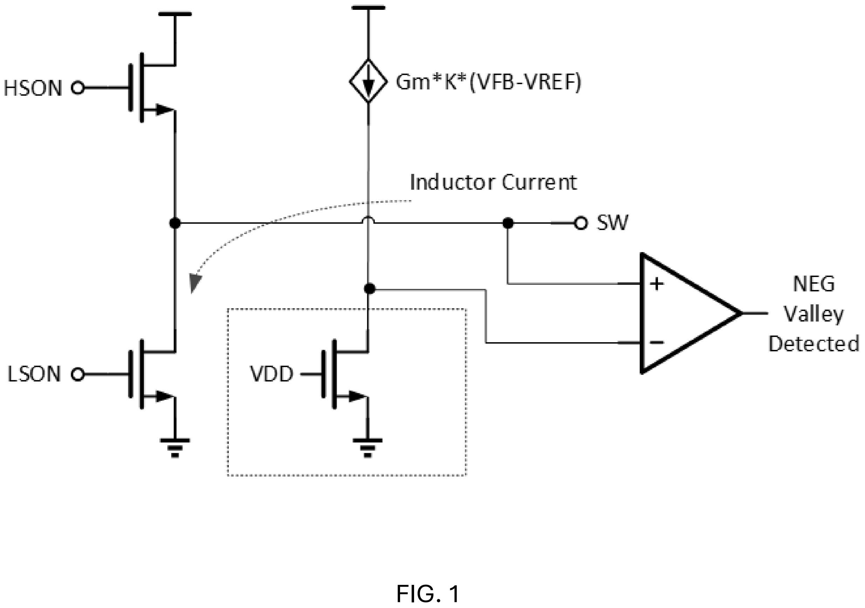

Fig.1 shows a schematic view of a power stage of the SMPS in accordance with the present disclosure.

Fig. 1 shows the high-side switch and the low-side switch of the SMPS. The control circuitry is arranged to control these two switches. In this particular example, the switches are embodied as FETs.

Further the control circuitry comprises a current source. The current source is arranged to provide a current to a low-side sense switch. Preferably, the same type of low-side sense switch is used as the one used for the SMPS, i.e. the low-side switch itself. The current provided by the current source equals a constant, i.e. a Gm*K, times the so-called error. The error is defined as the feedback voltage minus the reference voltage.

The voltage over the low-side switch is then compared, using the comparator, with the voltage over the low-side sense switch. Based on this comparison it can be concluded whether a negative valley is detected or not.

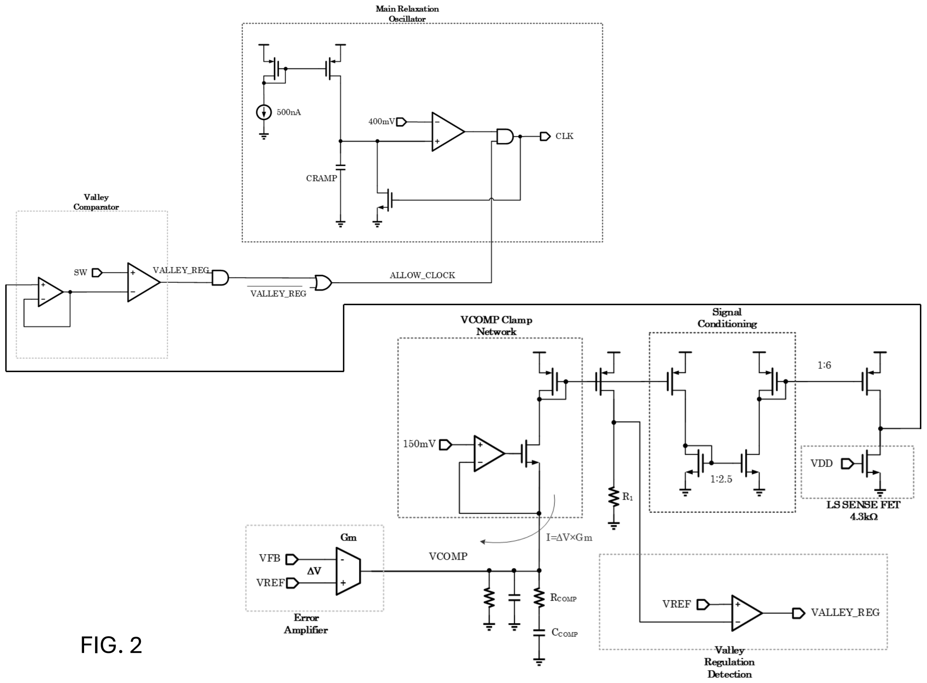

Fig. 2 shows the loop concept that relates to the control circuitry in accordance with the present disclosure.

The loop concept comprises a couple of stages which are explained in more detail below.

The first stage is the error amplifier, which outputs the error times a constant. In this case, the error amplifier outputs (feedback voltage - reference voltage) * Gm.

In the second stage, being a clamping network, the current is mirrored to a second side. The mirrored current is then used for inducing a voltage over a resistance, which voltage is compared to the reference voltage for the valley registration.

In the third stage, the signal is conditioned, for example, with a ratio or the like. The output, i.e. the output current, then flows through the low-side sense switch as explained with reference to Fig. 1.

The fourth stage is the valley comparator, which is shown in Fig. 1.

Finally, the output of the valley comparator is used to determine whether the next clock cycle can be initiated within the main relaxation oscillator.

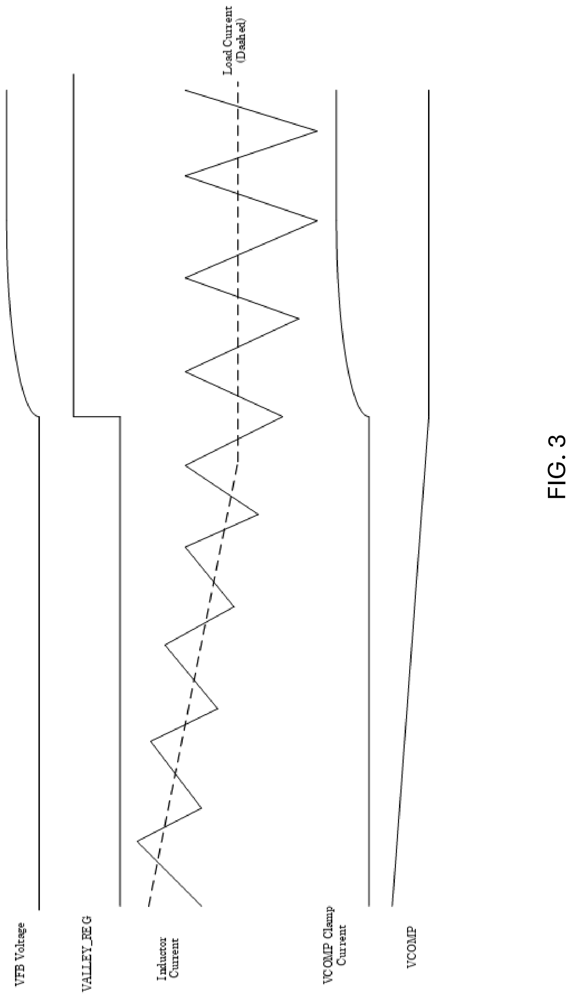

Fig. 3 shows a schematic overview of waveforms related to the control scheme in accordance with the present disclosure.

The top wave form shows the feedback voltage. This can be the output voltage or a down-converted version of the output voltage. The valley-reg is the signal that defines whether a valley has been registered, i.e. valley regulation will initiate.

The inductor current is shown in the third waveform. It is clear that the sawtooth of the inductor current has a particular bandwidth over the average (dashed line) of the inductor current. As shown in the third waveform, whenever an error, i.e. the feedback voltage, increases too much, the valley regulation will initiate. This means that the valley of the saw tooth of the inductor current is regulated. Once the valley of the saw tooth reaches a particular threshold, the next clock cycle of the control of the FETs of the SMPS will initiate.

As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification unless the Detailed Description section explicitly defines such terms. Accordingly, the actual scope of the technology encompasses not only the disclosed examples but also all equivalent ways of practicing or implementing the technology under the claims.

## Claims

1. A Switched Mode Power Supply (SMPS) comprising:
a switching stage having a high-side switch, a low-side switch, and an output inductor; and
control circuitry that operates the high-side switch and the low-side switch based on a clock signal,
wherein the control circuitry is configured to:
detect that an output voltage of the switching stage deviates from a reference voltage,
enable negative valley regulation after the detecting that the output voltage deviates from the reference voltage,
upon enabling the negative valley regulation, detect that a current flowing through the inductor falls below a threshold, and
initiate a next clock cycle of the clock signal once the current flowing through the inductor is detected to fall below the threshold.

2. The SMPS according to claim 1, wherein the control circuitry is configured to set the threshold.

3. The SMPS according to claim 2, wherein the control circuitry is configured to set the threshold by determining a difference between an output voltage of the switching stage and a reference output voltage.

4. The SMPS according to claim 3, wherein the control circuitry further comprises:
a low-side sense switch; and
a current source,
wherein the current source is configured to provide a current to the low-side sense switch,
wherein the current is proportional to the difference between the output voltage of the switching stage and the reference output voltage, and
wherein the threshold is a voltage over the low sense switch caused by the current.

5. The SMPS according to claim 4, wherein the high-side switch, the low-side switch, and the low-side sense switch are Field-Effect Transistors (FET).

6. The SMPS according to claim 5, wherein the low-side switch and the low-side sense switch are a same type of FET.

7. The SMPS according to claim 1, wherein the SMPS is at least one selected from the group consisting of: a buck converter, a boost converter, a buck-boost converter, a cuk converter, a flyback converter, and a forward converter.

8. The SMPS according to claim 5, wherein the SMPS is at least one selected from the group consisting of: a buck converter, a boost converter, a buck-boost converter, a cuk converter, a flyback converter, and a forward converter.

9. A method of operating a Switched Mode Power Supply (SMPS), the method comprising the steps of:
operating, by a control circuitry, a high-side switch and a low-side switch based on a clock signal;
detecting, by the control circuitry, that an output voltage of a switching stage deviates from a reference voltage;
enabling negative valley regulation after the detecting that the output voltage deviates from the reference voltage;
upon enabling the negative valley regulation, detecting, by the control circuitry, that a current flowing through an inductor falls below a threshold, and
initiating, by the control circuitry, a next clock cycle of the clock signal once the current flowing through the inductor is detected to fall below the threshold.

10. The method according to claim 9, wherein the method further comprises the step of:
setting, by the control circuitry, the threshold.

11. The method according to claim 10, wherein the step of setting comprises:setting, by the control circuitry, the threshold that comprises determining a difference between an output voltage of the switching stage and a reference output voltage.

12. The method according to claim 11, wherein the control circuitry further comprises a low-side sense switch and a current source, and the method comprises the step of:
providing, by the current source, a current to the low-side sense switch, the current being proportional to the difference,
wherein the current is proportional to the difference between the output voltage of the switching stage and the reference output voltage, and
wherein the threshold is a voltage over the low sense switch caused by the current.

13. The method according to claim 12, wherein the high-side switch, the low-side switch, and the low-side sense switch are Field-Effect Transistors (FET).

14. The method according to claim 13, wherein the low-side switch and the low-side sense switch are a same type of FET.

15. The method according to any of the claims 8 - 13, wherein the SMPS is at least one selected from the group consisting of: a buck converter, a boost converter, a buck-boost converter, a cuk converter, a flyback converter, and a forward converter.

16. The method according to claim 9, wherein the SMPS is at least one selected from the group consisting of: a buck converter, a boost converter, a buck-boost converter, a cuk converter, a flyback converter, and a forward converter.

17. The method according to claim 12, wherein the SMPS is at least one selected from the group consisting of: a buck converter, a boost converter, a buck-boost converter, a cuk converter, a flyback converter, and a forward converter.

18. A computer program product comprising a non-transitory computer-readable medium having instructions stored thereon which, when executed by a control circuitry of a Switched Mode Power Supply (SMPS), cause the control circuitry to perform a method comprising the steps of:
operating, by a control circuitry, a high-side switch and a low-side switch based on a clock signal;
detecting, by the control circuitry, that an output voltage of a switching stage deviates from a reference voltage;
enabling negative valley regulation after the detecting that the output voltage deviates from the reference voltage;
upon enabling negative valley regulation, detecting, by the control circuitry, that a current flowing through an inductor falls below a threshold; and
initiating, by the control circuitry, a next clock cycle of the clock signal once the current flowing through the inductor is detected to fall below the threshold.

19. The computer program product according to claim 18, wherein the instructions further cause the control circuitry to perform the steps of:
setting, by the control circuitry, the threshold by determining a difference between an output voltage of the switching stage and a reference output voltage.

20. The computer program product according to claim 19, wherein the instructions further cause the control circuitry to perform the steps of:
providing, by a current source, a current to a low-side sense switch, the current being proportional to the difference,
wherein the current is proportional to the difference between the output voltage of the switching stage and the reference output voltage, and
wherein the threshold is a voltage over the low sense switch caused by the current.
